# FASCICULE DE BREVET EUROPEEN

(11) **EP 2 557 113 B1**
(45) Date de publication et mention de la délivrance du brevet: **31.12.2014**
(21) Numéro de dépôt: 12179266.7
(22) Date de dépôt: 03.08.2012
(51) Int. Cl.: C08K 3/22

(54) **Matériau ignifuge comprenant un biopolymère**
Feuerhemmendes Material, das ein Biopolymer enthält
Flame-retardant material comprising a biopolymer

(30) Priorité: 12.08.2011 FR 1157327
(43) Date de publication de la demande: 13.02.2013
(73) Titulaire: Schneider Electric Industries SAS, 92500 Rueil-Malmaison (FR)
(72) Inventeur: Siegrist, Alexander, 38050 Grenoble Cedex 9 (FR); Eriksson, Per, 38050 Grenoble Cedex 9 (FR)
(74) Mandataire: Augarde, Eric

(56) Documents cités:
- EP-A1- 1 361 039

## Description

### DOMAINE TECHNIQUE

L'invention concerne un matériau ignifuge comprenant un biopolymère, plus exactement un biopolymère thermoplastique, aussi appelé bioplastique.

Plus précisément, l'invention a trait à un matériau ignifuge apte à être moulé ou extrudé. Ce matériau comprend une matrice organique comprenant au moins 50% en masse d'au moins un biopolymère, un agent ignifuge choisi parmi les hydroxydes métalliques (hydroxydes de métaux) de métaux, et un agent de couplage formant une interface entre la matrice et l'agent ignifuge.

Le matériau selon l'invention trouve notamment son application dans les appareils électriques tels que les boîtiers d'installation, et les systèmes de gestion des câblages.

### ÉTAT DE LA TECHNIQUE ANTÉRIEURE

Les matières plastiques, ou plus exactement les polymères thermoplastiques, sont utilisés dans de nombreux secteurs de l'industrie et notamment dans l'industrie électrique ; les propriétés de ces matières plastiques ont un impact considérable sur le Profil Environnemental du Produit, notamment sur l'impact CO₂ et ses conséquences sur le réchauffement climatique.

Par ailleurs, ces matières plastiques, comme le poly(éthylène) (PE), le poly (chlorure de vinyle) (PVC), et le polypropylène (PP) sont pour la plupart issues du pétrole, et posent de nombreux problèmes liés notamment à l'épuisement des réserves de pétrole, et au traitement des déchets les contenant.

L'utilisation de biopolymères, bioplastiques, qui ne présentent aucun des problèmes précités s'est donc considérablement accrue. Rappelons que par biopolymère, on entend un polymère issu exclusivement d'organismes vivants généralement végétaux, ou un polymère synthétisé à partir de ressources renouvelables, généralement végétales. Les biopolymères, bioplastiques, sont généralement biodégradables et compostables, et leurs déchets peuvent être facilement éliminés.

Un exemple d'un tel bioplastique est le poly (acide lactique) qui est un plastique obtenu par polymérisation de lactates qui proviennent notamment de la fermentation de l'amidon.

Bien qu' à l'heure actuelle le prix des bioplastiques soit plus élevé que celui des matières plastiques issues du pétrole, on peut s'attendre à ce que dans le futur leur prix devienne compétitif.

Pour de nombreuses utilisations des matières plastiques, qu'elles soient ou non biodégradables, il est nécessaire d'y incorporer un agent ignifuge.

Ainsi, les propriétés ignifuges auxquelles doivent satisfaire les matières plastiques utilisées dans les appareils électriques sont définies par des normes de l'IEC (« International Electrotechnical Commission ») comme la norme IEC 60695-2-1.

Les agents ignifuges les plus couramment utilisés sont les agents ignifuges halogénés ; cependant, ces agents ignifuges halogénés présentent l'inconvénient majeur de générer des composés corrosifs et toxiques tels que des dioxines lors de leur combustion, par exemple lors de l'incinération de déchets les contenant, et doivent donc être évités.

Des agents ignifuges qui ne contiennent pas d'halogènes sont notamment le polyphosphate d'ammonium, et les hydroxydes de métaux comme le trihydroxyde d'aluminium (ATH). Comparés aux agents ignifuges halogénés, les hydroxydes métalliques comme l'ATH libèrent peu de fumées et ne sont pas toxiques. Cependant, les compositions polymères qui contiennent ces composés, même à de très faibles quantités, ont des propriétés mécaniques très insuffisantes, à savoir une résistance mécanique très réduite et un module en flexion inférieur à 1000 MPa, ce qui les rend inaptes à de nombreuses utilisations.

Le document US 4,525,494 mentionne l'utilisation du trihydroxyde d'aluminium (ATH) enrobé d'acide gras dans des compositions polymères dont le module en flexion est élevé. Cependant, cet agent ignifuge enrobé est d'un coût élevé. En outre, les agents ignifuges enrobés provoquent un phénomène de blanchiment sous contrainte (« *stress whitening* ») important dans les compositions polymères les contenant.

Pour remédier à cet inconvénient, le document WO 01/51554 décrit une composition polymère ignifuge constituée d'un polyéthylène, d'un ou plusieurs liant(s) dont un agent ignifuge tel que le trihydrate d'aluminium. Au moins 5% en poids des polymères sont modifiés avec de l'anhydride maléique, Cette composition polymère est utilisée dans l'industrie électrique.

Les documents EP 1 544 250, EP 674 627, EP 1 795 561, US 2008/0108729, EP 1 816 169, EP 1 361 039, et WO 2008/058020 décrivent des compositions dont le taux de charge non-plastique est supérieur à 30% leur rigidité est élevée mais leur flexibilité très faible avec un allongement à la rupture inférieur à 3%.

Une telle flexibilité est nettement insuffisante pour que ces compositions puissent être utilisées dans des procédés de moulage ou d'extrusion notamment pour préparer des objets convenant à une utilisation dans l'industrie électrique.

Il existe donc un besoin pour un matériau ignifuge, c'est-à-dire satisfaisant à la norme CEI, IEC 60695-2-1 en vigueur au 30 mars 2011 comprenant une matrice polymère constituée en partie ou en totalité par un biopolymère, et un agent ignifuge choisi parmi les hydroxydes métalliques tels que le trihydroxyde d'aluminium (ATH), qui possède une flexibilité améliorée avec un allongement à la rupture accru.

Il existe aussi un besoin pour un tel matériau qui présente, outre un allongement à la rupture accru, de bonnes propriétés mécaniques représentées par exemple par un module d' élasticité de Young (« *E-modulus* ») et une contrainte maximale (« *Maximum strength* ») élevés (correspondant à ISO 527-1 et suivantes).

Il existe ensuite un besoin pour un tel matériau qui puisse être facilement moulé ou extrudé pour préparer de manière simple, fiable et non polluante, à un faible coût, des objets même de formes complexes et notamment des objets utilisés dans l'industrie électrique tels que des boîtiers d'installation, des systèmes de gestion des câblages etc., ces objets étant rigides et résistant aux chocs.

Le but de l'invention est de fournir un matériau ignifuge qui réponde entre autres aux besoins énumérés plus haut. Le but de l'invention est encore de fournir un matériau ignifuge qui ne présente pas les inconvénients, défauts, limitations et désavantages des compositions de l'art antérieur.

### EXPOSÉ DE L'INVENTION

Ce but, et d'autres encore, sont atteints, conformément à l'invention, par un matériau ignifuge comprenant :
- une matrice comprenant, de préférence constituée par, au moins un polymère organique ;
- un agent ignifuge choisi parmi les hydroxydes métalliques ; et
- un agent de couplage formant une interface entre la matrice et l'agent ignifuge ;
dans lequel la matrice comprend au moins 50% en masse d'au moins un biopolymère, et l'agent de couplage est constitué par un copolymère d'éthylène et d'acétate de vinyle (EVA), comprenant au moins 40% en masse d'acétate de vinyle (VA), greffé par de l'anhydride maléique.

Ce copolymère n'ayant plus les propriétés typiques d'un EVA, et présentant une teneur élevée en acétate de vinyle peut également être nommé EVM selon la terminologie des élastomères.

Par matériau ignifuge au sens de l'invention, on entend généralement que ce matériau satisfait à la norme IEC-60695-2-1 en vigueur au 30 mars 2011 (avec un fil d'incandescence à 850°C sur une épaisseur de plaque supérieure à 1,5 mm).

Avantageusement, le matériau présente un allongement à la rupture mesuré par le mode opératoire précisé dans la norme ISO 527 en vigueur au 30 mars 2011 supérieur à 4,5%.

Avantageusement, le copolymère d'éthylène et d'acétate de vinyle comprend de 55% à 75% en masse, par exemple 60% en masse, d'acétate de vinyle. Un exemple d'un tel copolymère est le copolymère disponible auprès de la société LANXESS^{™} sous la dénomination de Levamelt^{™} 600.

Avantageusement, le copolymère d'éthylène et d'acétate de vinyle est greffé par de l'anhydride maléique de manière connue dans le métier, à raison par exemple de 0,1% à 10% en masse.

Avantageusement, l'agent ignifuge est choisi parmi le trihydroxyde d'aluminium (ATH), l'hydroxyde de magnésium, l'hydrate de calcium/aluminium, l'hydrate d'oxyde d'étain ou phlogopite, et leurs mélanges (voir EP 1 544 250, WO 01/551554).

Généralement, l'agent ignifuge se présente sous la forme de particules ayant un diamètre moyen (d₅₀) dans la gamme de 0,1 à 10 µm, de préférence dans la gamme de 0,5 à 8 µm, de préférence encore dans la gamme de 1 à 5 µm.

Avantageusement, le biopolymère est choisi parmi le poly(acide lactique) PLA et les biopolymères polyesters autres que le poly(acide lactique).

Par poly(acide lactique), on entend tous les types de poly(acide lactique). Le terme poly(acide lactique) couvre le poly(L-acide lactique) ou PLLA constitué de motifs structuraux L-acide lactique, le poly(D-acide lactique) ou PDLA constitué de motifs structuraux D- acide lactique, ou le poly(DL-acide lactique) constitué de motifs structuraux D-acide lactique et L-acide lactique, et les mélanges de deux ou plus de ceux-ci.

La proportion d'isomères D et d'isomères L du poly(acide lactique) mise en oeuvre selon l'invention est généralement telle que le rapport entre les deux isomères soit de préférence de 100 : 0 à 90 : 10 ; de préférence encore, ce rapport est de 0,5 : 99,5 à 6 : 94.

Par poly(acide lactique), on entend aussi les copolymères de l'acide lactique avec un autre monomère choisi par exemple parmi les acides α-hydroxycarboxyliques, les diols aliphatiques, et les acides aliphatiques dicarboxyliques.

Les polyesters biodégradables aussi appelés polyesters bioplastiques autres que le poly(acide lactique) peuvent être choisis parmi les polyesters aliphatiques biodégradables et les polyesters aromatiques aliphatiques biodégradables autres que le poly(acide lactique). Des exemples de polyesters aliphatiques biodégradables autres que le poly(acide lactique) comprennent les polyesters aliphatiques obtenus par condensation d'un diol aliphatique et d'un acide dicarboxylique aliphatique, les polyesters obtenus par polymérisation de lactones cycliques avec ouverture de cycle, les polyesters aliphatiques synthétiques, et analogues. Un exemple particulier d'un tel polyester biodégradable ou polyester bioplastique est le poly(succinate de butylène) (PBS).

Des exemples de polyesters aromatiques aliphatiques biodégradables comprennent les polyesters aromatiques aliphatiques comprenant un constituant acide dicarboxylique aromatique, un constituant acide dicarboxylique aliphatique, et un constituant diol aliphatique.

Avantageusement, le biopolymère de la matrice est constitué par du poly(acide lactique).

Avantageusement, la matrice comprend au moins 60% en poids d'au moins un biopolymère, de préférence la matrice comprend au moins 90% en masse d'au moins un biopolymère, voire est constituée par un ou plusieurs biopolymère(s) tel que le poly(acide lactique).

Alternativement, la matrice peut comprendre en outre un ou plusieurs autres polymère(s) qui ne sont pas des biopolymères afin de réduire le caractère biodégradable du matériau et/ou pour améliorer certaines des propriétés du matériau. Des exemples de tels polymères sont les polycarbonates, les copolymères Acrylonitrile-Butadiène-Styrène (ABS), les polystyrènes, et les polypropylènes.

Avantageusement, la matrice représente de 35% à 75% en masse, de préférence de 50% à 65% en masse de la masse totale du matériau.

Avantageusement, l'agent ignifuge représente de 25% à 65% en masse, de préférence de 35% à 50% en masse de la masse totale du matériau.

Avantageusement, l'agent de couplage représente de 1% à 25% en masse, de préférence de 4% à 10% en masse de la masse totale du matériau.

Outre l'agent ignifuge, le matériau selon l'invention peut comprendre un ou plusieurs additif (s) et/ou charge(s). Ainsi, le matériau selon l'invention peut, en outre, comprendre au moins un agent stabilisant anti-ultraviolets tel que le Chimassorb^{™} de la société Ciba Specialty Chemicals.

Le matériau selon l'invention peut, en outre, comprendre au moins une matière colorante choisie parmi les colorants et les pigments afin de donner la couleur souhaitée au matériau.

Le matériau selon l'invention peut en outre comprendre au moins un additif anti-hydrolyse pour éviter l'hydrolyse du matériau et améliorer sa stabilité sur une longue durée. Un tel agent anti-hydrolyse peut être choisi parmi les polycarbodiimides comme les Stabaxol^{™} ou les RHENOGRAN^{™} de la société Rhein-Chemie^{™}.

Il est bien entendu que les charges et additifs mentionnés plus haut ne le sont qu'à titre d'exemples. D'autres charges et additifs peuvent être inclus dans le matériau selon l'invention et pourront être facilement choisis par l'homme du métier au regard des propriétés que l'on souhaite voir présenter par ce matériau.

Avantageusement, le matériau selon l'invention peut être constitué en pourcentages en masse, par 45% à 65% d'au moins un biopolyester tel que le poly (acide lactique), 30% à 45% d'au moins un hydroxyde métallique tel que le trihydroxyde d'aluminium, 6% à 8% d'agent de couplage, et éventuellement un ou plusieurs additif(s) et/ou charge(s), la somme des pourcentages en masse du biopolyester, de l'hydroxyde métallique, de l'agent de couplage et du ou des additif(s) et/ou charge(s) éventuel(s), étant de 100% en masse.

Avantageusement, le matériau selon l'invention peut être préparé en mélangeant de manière homogène le polymère organique, l'agent ignifuge, l'agent de couplage, et éventuellement un ou plusieurs additif(s) et/ou charge(s), de préférence par un procédé de mélange par extrusion.

Le matériau ignifuge selon l'invention n'a jamais été décrit dans l'art antérieur ; il se distingue notamment des matériaux ignifuges de l'art antérieur en ce qu'il comprend un agent de couplage spécifique, constitué par un copolymère d'éthylène et d'acétate de vinyle comprenant au moins 40% en masse d'acétate de vinyle, greffé par de l'anhydride maléique. Comme on l'a indiqué plus haut, un copolymère d'EVA préféré comprend de 55% à 75% d'acétate de vinyle, par exemple 60% d'acétate de vinyle. Cette proportion de VA est nettement supérieure à celle des EVA courants qui contiennent seulement environ 30% d'EVA.

Le matériau selon l'invention ne présente pas les inconvénients, défauts, limitations et désavantages des matériaux ignifuges de l'art antérieur, et notamment des matériaux ignifuges de l'art antérieur à base de biopolymères contenant des hydroxydes métalliques en tant qu'agents ignifuges.

Le matériau selon l'invention résout le problème fondamental des matériaux ignifuges de l'art antérieur qui est leur flexibilité insuffisante. Plus précisément, l'élongation à la rupture du matériau ignifuge selon l'invention est améliorée de manière significative par rapport à l'élongation à la rupture des matériaux ignifuges de l'art antérieur. Il a été constaté de manière surprenante que le matériau selon l'invention présentait généralement un allongement à la rupture supérieur à 4,5%, ce qui est très nettement supérieur aux valeurs de l'élongation à la rupture des matériaux de l'art antérieur.

Outre cette excellente et étonnante flexibilité, le matériau selon l'invention possède globalement d'excellentes propriétés mécaniques par exemple un module d'élasticité de Young (« *E-modulus* ») supérieur à 1900 MPa et une contrainte maximale supérieure à 20 MPa.

L'excellente et surprenante flexibilité du matériau selon l'invention est démontrée dans les exemples donnés plus loin dans lesquels plus de cinquante formulations ont été testées, parmi lesquelles de nombreuses formulations décrites dans des demandes de brevet et dans la littérature et quatre formulations conformes à l'invention. Il s'est avéré, de manière surprenante que parmi toutes les formulations testées, seules les formulations selon l'invention permettaient d'obtenir une excellente flexibilité avec un allongement à la rupture supérieur à 4,5%.

Sans vouloir être lié par aucune théorie, on peut estimer que selon l'invention, il a été possible d'obtenir un matériau ignifuge étonnamment flexible grâce à la mise en oeuvre dans ce matériau d'un agent de couplage spécifique qui du fait de sa composition et de sa structure particulière communique une excellente flexibilité à la matrice organique et simultanément assure un couplage entre la matrice et l'agent ignifuge minéral qui selon l'invention est non traité.

En effet, dans l'agent de couplage selon l'invention, il s'est avéré que le copolymère EVA conférait une excellente flexibilité à la matrice organique et notamment aux biopolymères qui la constituent comme le PLA tandis que le greffage par de l'anhydride maléique assurait un bon couplage avec l'hydroxyde métallique.

Des résultats similaires peut être obtenus avec d'autres copolymères polaires, de type éthylène acrylate de butyle, méthyle ou éthyle (EBA, EMA, EEA), greffés par de l'anhydride maléique.

De plus, la teneur élevée en acétate de vinyle, qui est le composant polaire de l'EVA assure un excellent mélange avec la matrice organique et notamment avec les biopolymères qui la constituent comme l'EVA.

Dans le matériau selon l'invention, lors du mélange des différents composants du matériau par exemple par extrusion, l'agent de couplage se fixe à la surface de l'agent ignifuge par l'intermédiaire des fonctions anhydrides maléiques de l'agent de couplage.

L'agent de couplage forme ainsi une interface flexible entre l'agent ignifuge et la matrice en polymère organique, plus exactement entre chacune des particules d'agent ignifuge et la matrice en polymère organique. De plus, l'agent de couplage communique des propriétés de flexibilité à la matrice. Par exemple, le matériau selon l'invention a une élongation à la rupture nettement plus élevée que celle du PLA pur (environ 3%) alors même qu'il peut contenir des quantités importantes d'agent ignifuge hydroxyde métallique pouvant aller par exemple jusqu'à 40%, voire 50% en masse.

Les matières premières du matériau selon l'invention sont facilement disponibles et leur coût est modéré. Le matériau selon l'invention est non toxique notamment du fait que l'agent ignifuge qu'il contient est choisi parmi les hydroxydes métalliques tels que l'ATH qui ne contiennent pas d'halogènes et ne génèrent pas de gaz toxiques.

La matière première de la matrice est entièrement ou majoritairement d'origine biologique (biopolymère) et a un faible impact sur l'émission de gaz à effet de serre. Du fait que les bioplastiques du matériau selon l'invention sont biodégradables et que les hydroxydes métalliques sont non toxiques, le matériau selon l'invention peut être qualifié de matériau recyclable.

Le matériau selon l'invention permet de fabriquer des produits, objets ignifuges à un prix raisonnable et de manière non polluante et respectueuse de l'environnement notamment avec une émission réduite de gaz à effet de serre.

Grâce à ses excellentes propriétés mécaniques et notamment à son excellente flexibilité, il est possible avec le matériau selon l'invention de fabriquer des objets moulés par injection et/ou extrudés, tels que des boîtiers d'appareillage électrique ou des dispositifs d'installation électrique comme les canalisations et systèmes de gestion de câbles, qui possèdent des propriétés ignifuges, et qui sont flexibles et résistants aux chocs.

Le matériau selon l'invention peut être préparé en mélangeant les matières premières destinées à former le matériau, à savoir le polymère organique, l'agent ignifuge et l'agent de couplage généralement à une température élevée supérieure à la température de ramollissement des polymères, jusqu'à l'obtention d'un mélange homogène de ces matières premières.

Avantageusement, tous les composants ont été séchés avant d'être transformés, par exemple dans une étuve sous vide à 60°C pendant 6 heures.

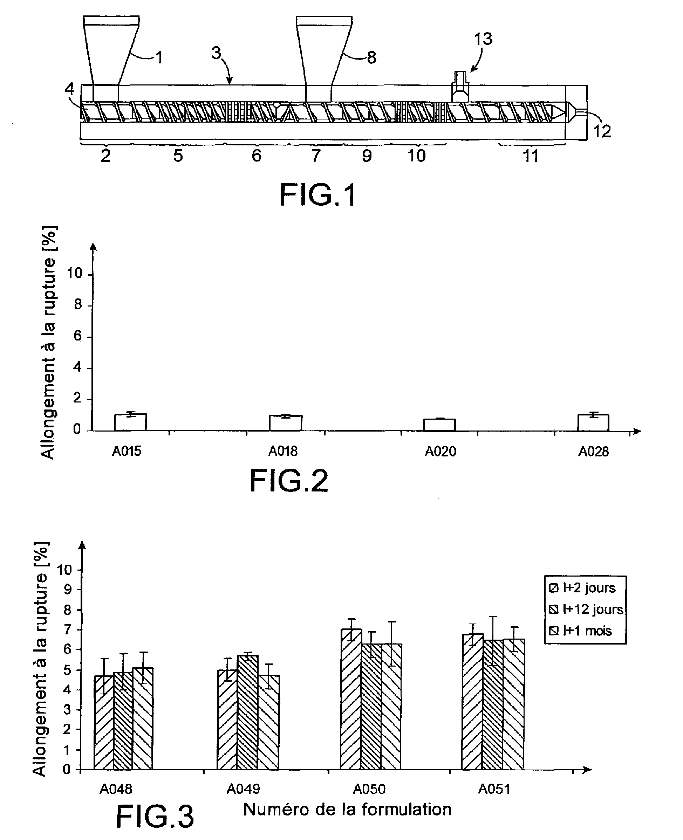

En général, on commence par mélanger, malaxer le ou les polymère(s) puis on leur ajoute les autres matières premières. Ce mélange peut être réalisé dans tout type de mélangeur, par exemple une extrudeuse ou un mélangeur discontinu (« *batch blender* »). Ce mélange peut être réalisé de préférence par un procédé de mélange par extrusion (« *extrusion mixing* » en anglais) dans une extrudeuse telle que celle représentée sur la Figure 1.

Cette extrudeuse comprend une première trémie (1) par laquelle est réalisée l'alimentation en le ou les polymère(s) du matériau selon l'invention. Cette trémie (1) débouche dans une première zone d'alimentation (2) du fourreau (3) de l'extrudeuse dans laquelle la vis sans fin d'extrusion (4) est mise en rotation.

Le fourreau (3) de l'extrudeuse est généralement chauffé à une température supérieure à la température de ramollissement du ou des polymère(s), par exemple à une température de 150°C à 190°C.

Le ou les polymère(s) est (sont) acheminé(s) par la vis d'extrusion et subit (subissent) successivement une compression dans une première zone de compression (5) puis un premier malaxage dans une première zone de malaxage (6) avant d'arriver dans une seconde zone d'alimentation (7) qui est alimentée par une seconde trémie (8) en la ou les charge(s) destinée (s) à être incorporée(s) dans le matériau selon l'invention.

Le matériau qui comprend donc le ou les polymère(s) additionné (s) de la ou des charge (s) est acheminé par la vis d'extrusion (4) dans une seconde zone de compression (9) puis dans une seconde zone de malaxage (10) puis dans une troisième zone de compression (11) avant de sortir de l'extrudeuse par une filière (12).

Le vide est réalisé dans le fourreau de l'extrudeuse par l'intermédiaire d'un piquage (13).

L'hydroxyde métallique est généralement introduit dans la trémie (8), et l'agent de couplage dans la trémie (1). Les additifs peuvent être introduits soit dans la trémie (1), soit dans la trémie (8) en fonction de la nature de l'additif.

A la sortie de cette extrudeuse, le matériau selon l'invention se présente généralement sous la forme de granulés ou pastilles. Il peut ensuite être utilisé pour préparer des objets divers pouvant présenter toutes sortes de tailles et de formes. Ces objets présentent de manière inhérente toutes les propriétés avantageuses du matériau à partir duquel ils sont préparés.

Ces objets peuvent être préparés par tout procédé de plasturgie, par exemple par moulage ou par extrusion, notamment par moulage par injection ou par extrusion de profilés. En particulier, une utilisation de ces objets dans l'industrie électrique, dans des applications où les propriétés ignifuges sont importantes, est possible. Il pourra s'agir par exemple de pièces, également objets selon l'invention, pour des applications dans les systèmes de gestion de câblage tels que les boîtiers d'installation et armoires électriques, les conduits de câble ou des boîtiers ou enveloppes d'appareils électriques tels que des prises, des disjoncteurs, des interrupteurs ou des appareils électroniques tels que des capteurs et des régulateurs.

Ainsi, l'invention a également trait à un boîtier d'un appareillage électrique ou à une canalisation électrique comprenant un matériau selon l'invention tel qu'il a été décrit plus haut.

Grâce à la mise en oeuvre du matériau selon l'invention, ces objets présentent un profil environnemental bien meilleur que les objets préparés à partir des matériaux de l'art antérieur et sont recyclables ou compostables.

L'invention concerne donc, en outre, l'utilisation du matériau selon l'invention pour la fabrication de boîtiers d'appareillages électriques ou de conduits de câbles électriques.

L'invention sera mieux comprise à la lecture de la description qui suit des modes de réalisation de l'invention faite sous la forme d'exemples décrivant des matériaux selon l'invention, et d'exemples comparatifs décrivant des matériaux non conformes à l'invention et donnant les résultats d'essais notamment des essais d'allongement à la rupture réalisés sur ces matériaux conformes et non conformes à l'invention.

### BRÈVE DESCRIPTION DES DESSINS

- La Figure 1, déjà décrite, est une vue latérale en coupe d'un extrudeur mélangeur utilisé pour préparer les matériaux selon l'invention.
- La Figure 2 est un graphique qui présente l'allongement à la rupture (en %) de quatre matériaux non conformes à l'invention préparés à partir de formulations nommées A015, A018, A020 et A028 (voir Tableau 7) qui comprennent 6% d'EVA et du Biomax^{™} Strong 120 disponible auprès de la société DuPont^{™} qui est un agent modifiant la flexibilité.
- La Figure 3 est un graphique qui présente l'allongement à la rupture (en %) de quatre matériaux conformes à l'invention préparés à partir de formulations nommées A048, A049, A050, A051 (voir Tableau 6).

Pour chacun des quatre matériaux A048, A049, A050, et A051, les trois barres (1+2 jours ; I+12 jours ; et I+1 mois) donnent les valeurs de l' allongement à la rupture lors d'essais d'allongement réalisés respectivement deux jours, 12 jours et un mois après la préparation du matériau.

### EXPOSÉ DÉTAILLÉ DE MODES DE RÉALISATION PARTICULIERS

### Exemples.

Dans ce qui suit, on prépare des matériaux à partir de compositions, formulations, identifiées par la dénomination AXX.

Ces matériaux sont préparés par extrusion mélange comme cela a été décrit plus haut, et se présentent sous la forme de granules. Pour obtenir les propriétés normalisés, les granules séchés ont été transformés en éprouvettes, barres de traction du type défini dans la norme ISO 527-1A (en vigueur au 30 mars 2011).

Tout d'abord, des matériaux sont préparés simplement à partir de formulations constituées par du PLA et de l' ATH en tant qu'agent ignifuge dans une proportion variable allant de 10% à 40% en masse.

On effectue des essais mécaniques (ISO 527) et un essai de résistance au feu (IEC-60695-2-1 en vigueur au 30 mars 2011) à 850°C avec une épaisseur de plaque de 1 mm et 2 mm sur ces matériaux : le matériau comprenant 30% en masse d'ATH présente des propriétés auto-extinguibles ; cependant, les matériaux obtenus sont très cassants avec un allongement à la rupture inférieur à 1%.

Un copolymère (EVA 1 : EVA avec une teneur en VA de 27, 5%) disponible sous la dénomination Escorene^{™} 02528 CC auprès de la société Exxon Mobil) et un copolymère greffé (EVA-MAH1 : EVA avec une teneur en VA de 28%, greffé par de l'anhydride maléique, disponible sous la dénomination Fusabond^{™} C 190 auprès de la société DuPont^{™}) sont ajoutés dans la formulation afin d' améliorer la flexibilité du matériau. Il s'agit-là d'une technologie connue dans ce domaine de la technique afin d'avoir une bonne interface entre la matrice en matière plastique et la charge d'hydroxyde métallique.

Les deux matériaux copolymères ont été testés chacun indépendamment, et en combinaison avec des pourcentages allant de 3% à 20% en masse dans la formulation.

Les matériaux ainsi testés sont les matériaux préparés à partir des formulations nommées A016, A014, A013, et A018.

Les formulations et les résultats des essais mécaniques et de l'essai de résistance au feu réalisés sur les matériaux préparés à partir de ces formulations sont donnés dans le Tableau 1 ci-dessous.

**Tableau 1.**

| | **A016** | **A014** | **A013** | **A018** |
|---|---|---|---|---|
| PLA | 57% | 60% | 65% | 54% |
| ATH 1 | 40% | 30% | 30% | 40% |
| EVA 1 | 3% | 5% | 0% | 6% |
| EVA-MAH 1 | 0% | 5% | 5% | 0% |
| Allongement à la Rupture ("*Er*") | 0,76% | 1,55% | 1,13% | 0,93% |
| Module de Young ("*E-Modulus*") | 7722 MPa | 2584 MPa | 3826 MPa | 6570 MPa |
| Contrainte Maximale ("*Maximum strength*") | 56 MPa | 25 MPa | 35 MPa | 51 MPa |
| Essai au feu | Conforme | Non conforme | Non conforme | Conforme |

| | | | | |
|---|---|---|---|---|
| PLA : Natureplast^{™} PLI003 de Natureplast^{™} ATH 1 : Alolt^{™} 59AF, de Magyar Alumina^{™} EVA 1 . Escorene^{™} 02528CC de Exxon Mobil^{™}, EVA avec une teneur en VA de 27,5%. EVA-MAH 1 : Fusabond^{™} C190 de DuPont^{™}, EVA avec une teneur en VA de 28%, greffé par de l'anhydride maléique MAH. | | | | |

Les meilleurs résultats en termes de flexibilité sont obtenus avec le matériau préparé à partir de la formulation (A014) constituée de 5% d' EVA, 5% d' EVA greffé par de l'anhydride maléique, 30% d'ATH et 60% de PLA avec une valeur de l'allongement à la rupture de 1,55%, qui n'est toutefois pas encore suffisante.

La conclusion est que l'EVA 1 et l' EVA-MAH 1 ne communiquent pas encore suffisamment de flexibilité à la formulation (formulations A013, A014, A016, A018).

Afin d'avoir un polymère plus flexible, des additifs de flexibilité connus ont été testés comme le Biomax Strong™ 120 disponible, auprès de la société DuPont^{™}, ainsi qu'un PBS (PBS 1) disponible auprès de la société Natureplast^{™} SA sous la dénomination Natureplast^{™} PBI 003 mais il en existe bien d'autres connus dans l'industrie.

Les matériaux ainsi testés sont les matériaux préparés à partir des formulations nommées A022, A019, A020, et A035.

Les formulations et les résultats des essais mécaniques et de l'essai de résistance au feu réalisés sur les matériaux préparés à partir de ces formulations sont donnés dans le Tableau 2 ci-dessous.

**Tableau 2.**

| | **A022** | **A019** | **A020** | **A035** |
|---|---|---|---|---|
| PLA | 95% | 57% | 54% | 45% |
| ATH 1 | 0% | 40% | 40% | 40% |
| Biomax^{™} Strong 120 | 5% | 3% | 6% | 0% |
| PBS 1 | 0% | 0% | 0% | 15% |
| Allongement à la Rupture ("*Er*") | 127% | 0,81% | 0,76% | 0,85% |
| Module de Young ("*E-Modulus*") | 3033 MPa | 8704 MPa | 7120 MPa | 6391 MPa |
| Contrainte Maximale ("*Maximum strength*") | 56 MPa | 56 MPa | 49 MPa | 45 MPa |

| | | | | |
|---|---|---|---|---|
| PBS 1: Polyester biodégradable Natureplast^{™} PBI 003 de Natureplast^{™} SA. | | | | |

Il a été montré que l'addition du Biomax Strong™ 120 au PLA augmente l'allongement à la rupture du matériau préparé à partir de cette formulation de 3% à 127% (A022). Cependant, l'addition d' hydroxyde métallique à du PLA comprenant des additifs de flexibilité connus, par exemple du PLA additionné de Biomax™ Strong 120 détruit toutes les propriétés de flexibilité du matériau et l'allongement à la rupture diminue énormément jusqu'à moins de 1% (A019-A020 et A035).

La combinaison des additifs de flexibilité connus (Biomax Strong^{™} 120, PBS) avec des agents de couplage greffés par de l'anhydride maléique (EVA-MAH 1 : Fusabond^{™} C190) dans le PLA ne résout pas non plus le problème (Formulations A021, A028 : voir le Tableau 3 ci-dessous).

Le Biomax Strong^{™} a aussi été testé en combinaison avec le Stabaxol^{™} P un agent anti-hydrolyse décrit dans le brevet EP-B1-1 544 250. Bien que la diminution de la masse moléculaire soit quelque peu réduite, le matériau est encore cassant (Formulation A024 : voir le Tableau 3 ci-dessous).

**Tableau 3.**

| | **A021** | **A028** | **A024** |
|---|---|---|---|
| PLA | 54% | 48% | 52% |
| ATH 1 | 40% | 40% | 40% |
| Biomax™ Strong 120 | 3% | 6% | 3% |
| EVA-MAH 1 | 3% | 6% | 0% |
| Stabaxol™P | 0% | 0% | 5% |
| Allongement à la Rupture ("Er") | 1,14% | 1,32% | 1,22% |
| Module de Young *("E-Modulus")* | 3109 MPa | 1438 MPa | 2670 MPa |
| Contrainte Maximale ("*Maximum strength*") | 27 MPa | 17 MPa | 23 MPa |
| Essai au feu | Non conforme | Non conforme | Non conforme |

| | | | |
|---|---|---|---|
| Stabaxol^{™} P, RHENOGRAN^{™} PCD-50/EVA, de la société Rhein-Chemie^{™}, agent anti-hydrolyse polycarbo-diimide . | | | |

Différents types d'ATH, parmi lesquels des produits de taille submicronique (Apyral^{™} 200SM de Nabaltec^{™}) qui sont précipités (Apyral^{™} 60CD, Apyral^{™} 200SM de Nabaltec^{™}) à partir d'une solution plutôt que d'être broyés, ont été testés sans aucun impact positif sur l'allongement à la rupture (Formulations A030-A033 : voir Tableau 4 ci-dessous)

**Tableau 4.**

| | **A028** | **A031** | **A033** | **A036** |
|---|---|---|---|---|
| PLA | 48% | 48% | 48% | 54% |
| ATH 1 | 40% | 0% | 0% | 0% |
| ATH 2 | 0% | 40% | 33% | 0% |
| ATH 3 | 0% | 0% | 7% | 0% |
| ATH 4 | 0% | 0% | 0% | 40% |
| Biomax™ Strong 120 | 6% | 6% | 6% | 6% |
| EVA-MAH 1 | 6% | 6% | 6% | 0% |
| Allongement à la Rupture ("*Er*") | 1,32% | 1,13% | 0,57% | 0,31% |
| Module de Young ("*E-Modulus*") | 1439 MPa | 1621 MPa | 2836 MPa | 4556 MPa |
| Contrainte Maximale ("*Maximum strength*") | 17 MPa | 15 MPa | 12 MPa | 16 MPa |

| | | | | |
|---|---|---|---|---|
| ATH 2: Apyral^{™} 60CD de Nabaltec^{™} ATH 3: Apyral^{™} 200SM de Nabaltec^{™} ATH 4: Apyral^{™} 60 VS1 de Nabaltec^{™}, ATH avec revêtement de vinylsilane. | | | | |

Ensuite, des hydroxydes métalliques revêtus (comme ceux décrits dans le brevet EP 1 544 250) et des additifs de flexibilité connus (Biomax Strong™ 120, PBS) ont été testés avec le PLA pour surmonter le problème.

Ainsi, la formulation A036 mentionnée dans le Tableau 4 contient de l'APYRAL^{™} 60 VS 1 de NABALTEC^{™} qui est un ATH traité par du vinylsilane. L'élongation à la rupture du matériau préparé à partir de cette formulation est en-dessous de 0,5%.

Un autre ATH (ATH 5) pourvu d' un autre revêtement (acide gras) disponible auprès de la société HUBER^{™} aux Etats-Unis, sous la dénomination Hymod^{™} SB-432 ST1 a donné d'aussi mauvais résultats (Formulation 041 du Tableau 5 ci-dessous).

Bien que ces hydroxydes métalliques ayant subi un traitement de surface donnent une bonne interface entre la matrice et l'hydroxyde métallique enrobé, ils ne permettent pas de communiquer à la matrice la flexibilité recherchée.

**Tableau 5.**

| | **A028** | **A041** |
|---|---|---|
| PLA | 48% | 54% |
| ATH 1 | 40% | 0% |
| ATH 5 | 0% | 40% |
| Biomax™ Strong 120 | 6% | 6% |
| EVA-MAH 1 | 6% | 0% |
| Allongement à la Rupture ("*Er*") | 1,32% | 0,91% |
| Module de Young ("*E-Modulus*") | 1439 MPa | 4751 MPa |
| Contrainte Maximale ("*Maximum strength*") | 17 MPa | 24 MPa |

| | | |
|---|---|---|
| ATH 5 : Hymod^{™} SB-432 ST1 de Huber^{™}, ATH avec revêtement d'acide gras. | | |

On constate donc au regard des résultats d'essais exposés plus haut que toutes les méthodes décrites ci-dessus et connues dans l'art antérieur n'ont pas pu apporter la flexibilité suffisante à la composition.

Le Levamelt^{™} 600 est un EVA avec une teneur en VA de 60%. Cette teneur est supérieure à celle de l'EVA courant qui a une teneur en VA de 30% ; dans l'industrie du caoutchouc, ce composé est appelé EVM du fait de ses propriétés caoutchouteuses.

L'addition, à raison de 6% ou 8% en masse de Levamelt™ 600 greffé par de l'anhydride maléique dans les formulations A048 à A051 (voir Tableau 6 ci-dessous) donne un matériau conforme à l'invention avec un allongement à la rupture qui est étonnamment bon.

**Tableau 6.**

| | **A048** | **A049** | **A050** | **A051** |
|---|---|---|---|---|
| PLA | 51,5% | 49,0% | 49,5% | 47% |
| ATH 1 | 42,5% | 45% | 42,5% | 45% |
| EVA-MAH 2 | 6% | 6% | 8% | 8% |
| Allongement à la Rupture ("*Er*") | 4,69% | 5,01% | 6,97% | 6,74% |
| Module de Young ("*E-modulus*") | 2153 MPa | 2401 MPa | 2012 MPa | 1996 MPa |
| Contrainte Maximale ("*Maximum strength*") | 26 MPa | 24 MPa | 24 MPa | 22 MPa |
| Essai au feu | Conforme | Conforme | Conforme | Conforme |

| | | | | |
|---|---|---|---|---|
| EVA-MAH 2 : Levamelt^{™} 600 de Lanxess^{™}, EVA avec une teneur en VA de 60%, greffé par de l'anhydride maléique MAH. | | | | |

Pour effectuer une comparaison, on réalise des essais de résistance mécanique et des essais de résistance au feu sur 4 matériaux non conformes à l'invention préparés à partir de formulations A015, A018, A020, et A028.

Les formulations et les résultats des essais sont donnés dans le Tableau 7 ci-dessous.

**Tableau 7.**

| | **A015** | **A018** | **A020** | **A028** |
|---|---|---|---|---|
| PLA | 64% | 54% | 54% | 48% |
| ATH 1 | 30% | 40% | 40% | 40% |
| EVA 1 | 6% | 6% | 0% | 0% |
| EVA-MAH 1 | 0% | 0% | 0% | 6% |
| Biomax Strong™ 120 | 0% | 0% | 6% | 6% |
| Allongement à la Rupture ("*Er*") | 1,03% | 0,93% | 0,76% | 1,32% |
| Module de Young ("*E-Modulus*") | 5505 MPa | 6570 MPa | 7120 MPa | 1438 MPa |
| Contrainte Maximale ("*Maximum strength*") | 52 MPa | 51 MPa | 49 MPa | 17 MPa |
| Essai au feu | Conforme | Conforme | Non conforme | Non conforme |

| | | | | |
|---|---|---|---|---|
| PLA : Natureplast^{™} PLI003 de Natureplast^{™} ATH 1 : Alolt^{™} 59AF de Magyar Alumina^{™} EVA 1 : Escorene^{™} 02528CC de Exxon Mobil^{™}, EVA avec une teneur en VA de 27,5%. EVA-MAH 1 : Fusabond^{™} C190 de DuPont^{™}, EVA avec une teneur en VA de 28%, greffé par de l'anhydride maléique MAH. Biomax Strong^{™} 120 de DuPont^{™}. | | | | |

Bien que la teneur en charge ignifuge (ATH) soit plus faible dans les formulations A015, A018 et A020 que dans les formulations A048 à A051 conformes à l'invention, l'allongement à la rupture reste très faible pour ces formulations, qui donnent un "plastique" cassant (voir Figure 2).

En revanche, l' EVA-MAH 2 a un effet étonnamment fort sur l'allongement à la rupture, puisque le matériau préparé à partir des formulations A048 à A051 contenant de l'EVA-MAH 2 présente un accroissement d'environ 500% de l'allongement à la rupture comme on peut le voir sur la Figure 3.

Avec les formulations A048 à A051 contenant de l'EVA-MAH 2, les matériaux (conformes à l'invention) ne sont plus du tout cassants.

## Revendications

1. Matériau ignifuge comprenant :
- une matrice comprenant, de préférence constituée par, au moins un polymère organique ;
- un agent ignifuge choisi parmi les hydroxydes métalliques ; et
- un agent de couplage formant une interface entre la matrice et l'agent ignifuge ;
dans lequel la matrice comprend au moins 50% en masse d'au moins un biopolymère, et l'agent de couplage est constitué par un copolymère d'éthylène et d'acétate de vinyle (EVA) comprenant au moins 40% en masse d'acétate de vinyle (VA), greffé par de l'anhydride maléique.

2. Matériau selon la revendication 1, **caractérisé en ce qu'**il satisfait à la norme IEC 60695-2-1.

3. Matériau selon l'une quelconque des revendications précédentes, qui présente un allongement à la rupture mesuré par le mode opératoire précisé dans la norme ISO 527 supérieur à 4,5%.

4. Matériau selon l'une quelconque des revendications précédentes, dans lequel le copolymère d'éthylène et d'acétate de vinyle comprend de 55% à 75% en masse, par exemple 60% en masse, d'acétate de vinyle.

5. Matériau selon l'une quelconque des revendications précédentes, dans lequel l'agent ignifuge est choisi parmi le trihydroxyde d'aluminium (ATH), l'hydroxyde de magnésium, l'hydrate de calcium/aluminium, l' hydrate d'oxyde d' étain, et leurs mélanges.

6. Matériau selon l'une quelconque des revendications précédentes, dans lequel le biopolymère est choisi parmi le poly(acide lactique) (PLA) et les biopolymères polyesters autres que le poly(acide lactique).

7. Matériau selon l'une quelconque des revendications précédentes, dans lequel la matrice comprend au moins 60% en masse d'au moins un biopolymère, de préférence la matrice comprend au moins 90% en masse d'au moins un biopolymère.

8. Matériau selon l'une quelconque des revendications précédentes, dans lequel la matrice comprend en outre un ou plusieurs autre(s) polymère(s) qui ne sont pas des biopolymères, choisi (s) de préférence parmi les polycarbonates, les copolymères Acrylonitrile-Butadiène-Styrène, les polystyrènes, et les polypropylènes.

9. Matériau selon l'une quelconque des revendications précédentes, dans lequel la matrice représente de 35% à 75% en masse, de préférence de 50% à 65% en masse de la masse totale du matériau.

10. Matériau selon l'une quelconque des revendications précédentes, dans lequel l'agent ignifuge représente de 25% à 65% en masse, de préférence de 35% à 50% en masse de la masse totale du matériau.

11. Matériau selon l'une quelconque des revendications précédentes, dans lequel l'agent de couplage représente de 1% à 25% en masse, de préférence de 4% à 10% en masse de la masse totale du matériau.

12. Matériau selon l'une quelconque des revendications précédentes, dans lequel le matériau comprend outre l'agent ignifuge un ou plusieurs additif(s) et/ou charge(s).

13. Matériau selon l'une quelconque des revendications précédentes, qui est constitué en pourcentages en masse, par 45% à 65% d'au moins un biopolyester tel que le poly (acide lactique), 30% à 45% d'au moins un hydroxyde métallique tel que le trihydroxyde d'aluminium, 6% à 8% d'agent de couplage, et éventuellement un ou plusieurs additif(s) et/ou charge(s), la somme des pourcentages en masse du biopolyester, de l'hydroxyde métallique, de l'agent de couplage et du ou des additif(s) et/ou charge(s) éventuel(s), étant de 100% en masse.

14. Boîtier d'un appareillage électrique ou canalisation électrique comprenant un matériau selon l'une quelconque des revendications précédentes.

15. Utilisation du matériau selon l'une quelconque des revendications 1 à 13, pour la fabrication de boîtiers d'appareillages électriques ou de conduits de câbles électriques.

## Patentansprüche

1. Flammwidriges Material, umfassend
- eine Matrix mit, vorzugsweise bestehend aus, mindestens einem organischen Polymer,
- ein flammwidriges Mittel aus der Gruppe der Metallhydroxyde und
- ein Kupplungsmittel als Verbindung zwischen der Matrix und dem flammwidrigen Mittel,
wobei die Matrix mindestens 50 Massenprozent mindestens eines Biopolymers umfasst und das Kupplungsmittel aus einem mit Maleinsäureanhydrid gefropftem Ethylvinylacetat-Copolymer (EVA) mit mindestens 40 Massenprozent Vinylacetat(VA) besteht.

2. Material nach Anspruch 1, **dadurch gekennzeichnet, dass** es der Norm IEC 60695-2-1 entspricht.

3. Material nach irgendeinem der vorhergehenden Ansprüche, das gemäß dem Messverfahren nach ISO 527 eine Bruchdehnung von mehr als 4,5 % aufweist.

4. Material nach irgendeinem der vorhergehenden Ansprüche, bei dem das Ethylvinylacetat-Copolymer 55 bis 75 Massenprozent, beispielsweise 60 Massenprozent Vinylacetat enthält.

5. Material nach irgendeinem der vorhergehenden Ansprüche, bei dem das flammwidrige Mittel wahlweise ein Aluminiumtrihydrat (ATH), Magnesiumhydroxyd, Calcium-Aluminium-Hydrat, Zinnoxydhydrat oder eines ihrer Gemische ist.

6. Material nach irgendeinem der vorhergehenden Ansprüche, bei dem das Biopolymer ein Polylactid (PLA) oder ein nicht zu den Polylactiden gehörendes Biopolymer-Polyester ist.

7. Material nach irgendeinem der vorhergehenden Ansprüche, bei dem die Matrix mindestens 60 Massenprozent mindestens eines Biopolymers, vorzugsweise mindestens 90 Massenprozent mindestens eines Biopolymers umfasst.

8. Material nach irgendeinem der vorhergehenden Ansprüche, bei dem die Matrix außerdem ein oder mehrere weitere Polymere umfasst, die keine Biopolymere sind und vorzugsweise zu den Polycarbonaten, Acrylonitril-Butadien-Styren-Copolymeren, Polystyrenen und Polypropylenen gehören.

9. Material nach irgendeinem der vorhergehenden Ansprüche, bei dem die Matrix 35 bis 75 Massenprozent, vorzugsweise 50 bis 65 Massenprozent der Gesamtmasse des Materials ausmacht.

10. Material nach irgendeinem der vorhergehenden Ansprüche, bei dem das flammwidrige Mittel 25 bis 65 Massenprozent, vorzugsweise 35 bis 50 Massenprozent der Gesamtmasse des Materials ausmacht.

11. Material nach irgendeinem der vorhergehenden Ansprüche, bei dem das Kupplungsmittel 1 bis 25 Massenprozent, vorzugsweise 4 bis 10 Massenprozent der Gesamtmasse des Materials ausmacht.

12. Material nach irgendeinem der vorhergehenden Ansprüche, bei dem das Material neben dem flammwidrigen Mittel einen oder mehrere Zusatz- und/oder Füllstoffe enthält.

13. Material nach irgendeinem der vorhergehenden Ansprüche, das in Massenprozent ausgedrückt mindestens 45 bis 65 % eines Biopolyesters wie z.B. Polylactid, mindestens 30 bis 45 % eines Metallhydroxyds wie z.B. Aluminiumtrihydroxyd, 6 bis 8 eines Kupplungsmittels sowie gegebenenfalls einen oder mehrere Zusatz- und/oder Füllstoffe enthält, wobei die Summe der Massenprozentanteile des Biopolyesters, des Metallhydroxyds, des Kupplungsmittels und der gegebenenfalls hinzugesetzten Zusatz- und/oder Füllstoffe 100 Massenprozent ergibt.

14. Gehäuse eines elektrischen Schaltgeräts oder einer Kabel- und Leitungsanlage mit einem Material nach irgendeinem der vorhergehenden Ansprüche.

15. Verwendung eines Materials nach irgendeinem der Ansprüche 1 bis 13 zur Herstellung von Gehäusen für elektrische Schaltgeräte oder Kabel- und Leitungsanlagen.

## Claims

1. Flame-retardant material comprising:
- a matrix comprising, preferably consisting of, at least one organic polymer;
- a flame-retardant agent chosen from metal hydroxides; and
- a coupling agent forming an interface between the matrix and the flame-retardant agent;
in which the matrix comprises at least 50% by weight of at least one biopolymer and the coupling agent is composed of a copolymer of ethylene and of vinyl acetate (EVA) comprising at least 40% by weight of vinyl acetate (VA) grafted by maleic anhydride.

2. Material according to Claim 1, **characterized in that** it meets Standard IEC 60695-2-1.

3. Material according to either one of the preceding claims, which exhibits an elongation at break, measured by the procedure specified in Standard ISO 527, of greater than 4.5%.

4. Material according to any one of the preceding claims, in which the copolymer of ethylene and of vinyl acetate comprises from 55% to 75% by weight, for example 60% by weight, of vinyl acetate.

5. Material according to any one of the preceding claims, in which the flame-retardant agent is chosen from aluminium trihydroxide (ATH), magnesium hydroxide, calcium/aluminium hydrate, tin oxide hydrate and their mixtures.

6. Material according to any one of the preceding claims, in which the biopolymer is chosen from poly(lactic acid) (PLA) and polyester biopolymers other than poly(lactic acid).

7. Material according to any one of the preceding claims, in which the matrix comprises at least 60% by weight of at least one biopolymer, preferably the matrix comprises at least 90% by weight of at least one biopolymer.

8. Material according to any one of the preceding claims, in which the matrix additionally comprises one or more other polymer(s) which are not biopolymers, preferably chosen from polycarbonates, acrylonitrile-butadiene-styrene copolymers, polystyrenes and polypropylenes.

9. Material according to any one of the preceding claims, in which the matrix represents from 35% to 75% by weight, preferably from 50% to 65% by weight, of the total weight of the material.

10. Material according to any one of the preceding claims, in which the flame-retardant agent represents from 25% to 65% by weight, preferably from 35% to 50% by weight, of the total weight of the material.

11. Material according to any one of the preceding claims, in which the coupling agent represents from 1% to 25% by weight, preferably from 4% to 10% by weight, of the total weight of the material.

12. Material according to any one of the preceding claims, in which the material comprises, in addition to the flame-retardant agent, one or more additive(s) and/or filler(s).

13. Material according to any one of the preceding claims, which consists, as percentages by weight, of 45% to 65% of at least one biopolyester, such as poly(lactic acid), 30% to 45% of at least one metal hydroxide, such as aluminium trihydroxide, 6% to 8% of coupling agent, and optionally one or more additive(s) and/or filler(s), the sum of the percentages by weight of the biopolyester, of the metal hydroxide, of the coupling agent and of the optional additive(s) and/or filler(s) being 100% by weight.

14. Housing of an electrical appliance or busbar trunking comprising a material according to any one of the preceding claims.

15. Use of the material according to any one of Claims 1 to 13 in the manufacture of housings for electrical appliances or of conduits for electrical cables.
